# EUROPEAN PATENT APPLICATION

(11) **EP 2 629 447 A1**
(43) Date of publication of application: **21.08.2013**
(21) Application number: 12305185.6
(22) Date of filing: 17.02.2012
(51) Int. Cl.: H04L 9/00

(54) **Method and device for protecting an electronic device against fault attack(s)**

(71) Applicant: Gemalto SA, 92190 Meudon (FR)
(72) Inventor: Gauteron, Laurent, 92190 MEUDON (FR); Villegas, Karine, 92190 MEUDON (FR); Pahaut, Olivier, 92190 MEUDON (FR)

(57) **Abstract**

A protection device (PD) equips an electronic device (ED) comprising hardware and software capable of executing a sensitive process (SP). This protection device (PD) comprises i) a detection means (DM) arranged for detecting a fault effect into the electronic device (ED), resulting from at least one fault attack of an attacker during execution of the sensitive process (SP), and ii) a correction means (CM) arranged for correcting this detected fault effect before it may be detected by the attacker, so that set up of the fault be considered as missed by this attacker.

## Description

### Technical field

The present invention relates to devices or products executing sensitive processes or cryptographic algorithms and sensitive to fault attacks, and for which a fatal reaction (such as "card suicide") cannot be implemented or cannot be used in specific scenarios.

### Background of the invention

The aim of a fault attack (or injection) may be determination of a secret or a ciphering/deciphering or cryptographic key or modification of a value to get additional rights (such as access or credits).

A fault attack is a type of physical attack that consists in submitting a device (comprising hardware and software capable of executing a sensitive process) to unusual environmental conditions to modify the execution of this sensitive process and to deduce sensitive information from its alter behaviour or results and/or to modify the attacked sensitive process. A fault may produce either a permanent effect which may permanently prevent execution of a sensitive process or modify the content of a memory or register, or a transient effect which may disappear after a reset.

An unusual environmental condition may result from incident particles, an unusual external temperature, an unusual electromagnetic interaction with an external device, incident waves having an unusual frequency, for instance, and may induce an unusual internal power consumption, the use of an unusual radio frequency, an internal temperature modification, or an unusual internal electromagnetism effect, for instance.

As it is known by the man skilled in the art when a device or product is sensitive to fault attacks and does not or cannot implement a fatal reaction (such as card suicide), the fault detection mechanism it usually implements is generally based on a sanction principle, like mute or a wrong return status/data, without any fatal reaction. This sanction principle is interpreted by the attacker as the consequence of its successful fault injection, so that he is very comfortable to perform other attacks until an exploitable fault attack path is found with one or several faults injected.

Moreover, mutes or a wrong return status/data give information for safe-error attack scenarios and enable to set up multi-fault scenario attacks path. Thus there is no limit in numbers of faults injected.

Several solutions have been proposed to avoid prosperity of fault attacks.

A first solution consists in setting up a reaction mechanism which is randomly delayed to avoid temporal knowledge of efficient fault injection. However, if the attacker just uses his fault as an "oracle" for safe-error attack scenario, such a solution is not efficient.

A second solution consists in increasing code complexity with more redundancy, more memory and more data integrity checks. However, this solution is not always acceptable as it implies a rise in terms of code size, execution times, memory used and, on top of that, it could potentially bring new weaknesses.

Regarding safe-error attack scenarios, as soon as there is a different reaction (or code execution) between a normal execution and a faulty one, there is no long term protection.

### Summary of the invention

So, an objective of the invention is to propose a new way to react after fault detection.

More precisely, the invention provides a method, intended for protecting an electronic device (comprising hardware and software capable of executing a sensitive process) against fault attack(s), and comprising the steps of:
(i) detecting a fault effect into the electronic device, resulting from at least one fault attack of an attacker during execution of the sensitive process, and
(ii) correcting this detected fault effect before it may be detected by the attacker, so that set up of the fault be considered as missed by this attacker.

The method according to the invention may include additional characteristics considered separately or combined, and notably:
- in step (ii) one may carry out the correction before any output is sent outside the electronic device;
- in a first embodiment, in step (i) one may compare a first value stored in a first memory means that may be subject to a fault attack with an initial value stored in at least one second memory means, and in step (ii) one may replace (or rewrite) this first value with the initial value into the first memory means if this first value differs from the initial value;
- in a second embodiment, in step (i), in case where execution beginning of the sensitive process requires a confidential information and reception of an erroneous information should induce a predetermined modification, one may compare each information received by the electronic device with this confidential information and determine if this information reception has induced the predetermined modification, and in step (ii), if the received information differs from the confidential information and has not induced the predetermined modification, one may proceed to this predetermined modification;
- in step (i), in case where execution beginning of the sensitive process requires a confidential information which is a confidential code and reception of an erroneous code should induce a predetermined modification which is an increment of a current value of a counter, one may compare each code received by the electronic device with the confidential code and the counter value after the code reception with the counter value before this code reception, and in step (ii), if the received code differs from the confidential code and if the counter value after the code reception is identical to the counter value before this code reception, one may increment the counter value;
- in a third embodiment, in step (i), in case where execution of the sensitive process comprises execution of a predetermined algorithm triggered by a predetermined value in a predetermined register, one may compare the current value in this predetermined register with this predetermined value, and in step (ii), if this current value differs from the predetermined value and is intended for triggering another algorithm, one may execute an odd number of times, at least equal to three, this other algorithm, then one may execute at least two times the predetermined algorithm, then one may compare results of executions of the other algorithm and of the predetermined algorithm, and one may keep the result appearing at least two times and replace the current value with the predetermined value;
- in step (i), in case where execution of the sensitive process comprises execution of a triple Data Encryption Standard (DES) algorithm triggered by a predetermined value in a predetermined register, one may compare the current value in this predetermined register with the predetermined value, and in step (ii), if the current value differs from the predetermined value and is intended for triggering a simple DES, one may execute the simple DES three times, then one may execute the triple DES at least two times, then one may compare results of executions of the three simple DES and of the triple DES, and one may keep the result appearing at least two times and replace the current value with the predetermined value;
- in a fourth embodiment, in step (i), in case where the sensitive process must be executed at least three times, one may compare the results of these executions, and one may keep the result appearing at least two times, called "correct result", and in step (ii) one may replace each result differing from the correct result with this correct result.

The invention also provides a protection device, intended for equipping an electronic device comprising hardware and software capable of executing a sensitive process, and comprising:
- a detection means arranged for detecting a fault effect into the electronic device, resulting from at least one fault attack of an attacker during execution of the sensitive process, and
- a correction means arranged for correcting this detected fault effect before it may be detected by the attacker, so that set up of the fault be considered as missed by this attacker.

The protection device according to the invention may include additional characteristics considered separately or combined, and notably:
- its correction means may be arranged for carrying out the correction before any output is sent outside the electronic device;
- in a first embodiment, its detection means may be arranged for comparing a first value stored in a first memory means that may be subject to a fault attack with an initial value stored in at least one second memory means, and its correction means may be arranged for replacing this first value with the initial value into the first memory means if this first value differs from the initial value;
- in a second embodiment, in case where execution beginning of the sensitive process requires a confidential information and reception of an erroneous information should induce a predetermined modification, its detection means may be arranged for comparing each information received by the electronic device with this confidential information and for determining if this information reception has induced this predetermined modification, and its correction means may be arranged, if the received information differs from the confidential information and has not induced the predetermined modification, for triggering this predetermined modification;
- in case where execution beginning of the sensitive process requires a confidential information which is a confidential code and reception of an erroneous information should induce a predetermined modification which is an increment of a current value of a counter, its detection means may be arranged for comparing each code received by the electronic device with this confidential code and the counter value after the code reception with the counter value before this code reception, and its correction means may be arranged, if the received code differs from the confidential code and if the counter value after the code reception is identical to the counter value before this code reception, for incrementing the counter value;
- in a third embodiment, in case where execution of the sensitive process comprises execution of a predetermined algorithm triggered by a predetermined value in a predetermined register, its detection means may be arranged for comparing the current value in this predetermined register with this predetermined value, and its correction means may be arranged, if this current value differs from this predetermined value and is intended for triggering another algorithm, for triggering execution an odd number of times, at least equal to three, of this other algorithm, then for triggering execution at least two times of the predetermined algorithm, then for comparing results of executions of this other algorithm and of this predetermined algorithm, and for forcing the result appearing at least two times as a correct result, and for triggering replacement of the current value with the predetermined value;
- in case where execution of the sensitive process comprises execution of a triple DES triggered by a predetermined value in a predetermined register, its detection means may be arranged for comparing the current value in this predetermined register with the predetermined value, and its correction means may be arranged, if the current value differs from the predetermined value and is intended for triggering a simple DES, for triggering execution of this simple DES three times, then for triggering execution of the triple DES at least two times, then for comparing results of executions of the three simple DES and of the triple DES, then for forcing the result appearing at least two times as a correct result, and then for triggering replacement of the current value with the predetermined value;
- in a fourth embodiment, in case where the sensitive process must be executed at least three times, its detection means may be arranged for comparing the results of these executions and for considering the result appearing at least two times as a correct result, and its correction means may be arranged for replacing each result differing from the correct result with this correct result.

The invention also provides an electronic device comprising hardware and software capable of executing a sensitive process, and a control device such as the one above introduced.

This electronic device may be chosen from a group comprising at least a smart card, a memory card reader, a telecommunication device, and a portable memory means.

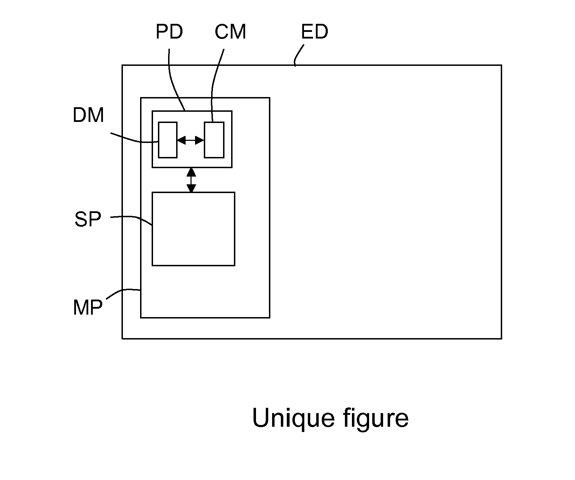

### Brief description of the figure

Other features and advantages of the invention will become apparent on examining the detailed specifications hereafter and the appended drawing, wherein the unique figure schematically and functionally illustrates an example of electronic device with a microprocessor comprising a protection device according to the invention coupled to a sensitive process.

### Detailed description of the preferred embodiment

The appended drawing may serve not only to complete the invention, but also to contribute to its definition, if need be.

The invention aims, notably, at offering a protection method, and an associated protection device PD, intended for protecting an electronic device ED from fault attack(s) of attacker(s).

The invention concerns electronic devices ED comprising hardware and software capable of executing a sensitive process SP and for which a fatal reaction (such as "card suicide") cannot be implemented or cannot be used in specific scenarios.

In the following description it will be considered that the electronic device ED is a smart card. For instance, it may be a credit card or an electronic identity card or else an electronic passport. But the invention is not limited to this type of electronic device. It concerns a lot of secured devices, and notably card readers, software protection dongles, telecommunication devices (for instance smart phones or electronic tablets), portable memory means (for instance USB keys), and secure modules present in a machine-to-machine communication in smart-metering devices.

In the example illustrated in the unique figure the electronic device ED comprises a microprocessor MP, which comprises hardware and software capable of executing a sensitive process SP, and a protection device PD according to the invention coupled to this sensitive process SP in order to protect it against fault attack(s) of attacker(s).

It is important to note that the protection device PD is not mandatorily located into the microprocessor MP (or any equivalent means, such as integrated circuits, for instance). Indeed, it may be a device that is coupled to the microprocessor MP and may access to the sensitive process SP that is running in it. Such a device PD may be also located into another device of the electronic device ED.

So a protection device PD can be made of software modules, at least partly, or of electronic circuit(s) or hardware modules, or else of a combination of hardware and software modules (in this last case the protection device PD comprises also software interfaces allowing interworking between its hardware and software modules). In case where it is made of software modules it can be stored in a memory means or in any computer software product which can be read by an electronic device.

As illustrated, a protection device PD, according to the invention, comprises at least a detection means DM and a correction means CM.

The detection means DM watches over at least a part of the electronic device ED and notably hardware and software that are concerned by the execution of the sensitive process SP. This watch is intended for detecting a fault effect into the electronic device ED, which results from at least one fault attack of an attacker during execution of the sensitive process SP.

Any type of fault effect induced by an unusual environmental condition of the electronic device ED may be detected by the detection means DM, and notably a modification of a value stored into a memory means (memory or register), the reception of an erroneous code, or an erroneous result of an algorithm or process. Generally speaking a fault effect may be a detected physical variation or the detected consequence of a physical variation.

When the detection means DM detects a fault effect, it may inform the correction means CM by means of a dedicated message describing this detected fault effect.

The correction means CM is arranged for correcting a detected fault effect before it may be detected by the attacker, so that set up of the fault be considered as missed by this attacker.

So, the sensitive process SP appears to "answer" correctly even if the fault injected has been efficient, but for the attacker the fault set up cannot be considered as such because it observes a correct answer to its fault attack(s).

Note that the correction is preferably carried out before any output is sent outside the electronic device ED. If this last condition is fulfilled the protection device PD may allow avoiding multi-faults set up. Indeed, the first fault injection effect being quickly corrected, the attacker does not know that it has been efficient, and therefore he may give up to its multi-faults attack or this may be a blocking event for his multi-faults set up.

The correction will depend of the detected fault effect. Some examples of detection and the corresponding correction are described hereafter.

A first example concerns the fault attacks that induce a modification of a first value that is stored in a first memory means (memory or register) of the microprocessor MP, that may be subject to a fault attack.

In this first example, the detection means DM compares the first value (stored in the first memory means) with an initial value stored in at least one second memory means that it comprises or that belongs to the microprocessor MP. One means here by "initial value" a value that was correct before the detected fault effect occurs (i.e. at the end of the last sensitive process execution). Then, the correction means CM replaces this first value with the initial value into the first memory means if this first value differs from the initial value (it is recalled that this last information is given by the detection means DM). The correction means CM could also regularly rewrites the initial value into the first memory means. In this case the value stored into the first memory means is regularly refreshed with the initial value got from at least one second memory means.

This first example concerns notably the register fault attacks. For instance, a register may be associated to a hardware special function and may contain, for instance, a hardware countermeasure set up which defines security mechanisms that must be activated during the sensitive process SP. So, an attacker could want to modify the content of this register by a single fault injection, for example to remove a memory scrambling, a random delay or a current scrambler, in order to be able to perform a side channel analysis or another analysis on the sensitive process SP. In this case, the protection device PD can enable either a regular adapted rewriting of the register content or a check during execution of the sensitive process SP, in order to restore the correct initial value. Thus the attacker will never see its fault effect on the side channel leakage and will not be able to exploit his fault injection.

A second example concerns the fault attacks that induce acceptance of an erroneous information by a sensitive process SP whose execution requires a confidential information, while reception of such an erroneous information should have induced a predetermined modification.

In this second example, the detection means DM compares each information received by the electronic device ED with the confidential information and determines if this information reception has induced the predetermined modification. Then, if the received information differs from the confidential information and has not induced the predetermined modification, the correction means CM triggers this predetermined modification.

For instance, in case where execution beginning of the sensitive process requires a confidential information which is a confidential code and reception of an erroneous information should induce a predetermined modification which is an increment of a current value of a counter, the detection means DM compares each code received by the electronic device ED with the confidential code, and compares the counter value after this code reception with the counter value before this code reception. Then, if the received code differs from the confidential code and if the counter value after the code reception is identical to the counter value before the code reception, the correction means CM increments the counter value.

This second example concerns notably PIN code verifications. Indeed, if an erroneous PIN code is received and does not induce increment of the corresponding counter value, due to a fault injection, the correction means CM increments this counter value.

A third example concerns the fault attacks that induce execution of an algorithm (for instance a ciphering (or cryptographic) one) that is simpler than the predetermined one which can be triggered by a predetermined value in a predetermined register.

In this third example, the detection means DM compares the current value in the predetermined register with the predetermined value. Then, if this current value differs from this predetermined value and is intended for triggering another algorithm, the correction means CM triggers execution an odd number of times, at least equal to three, of this other algorithm, then it triggers execution at least two times of this predetermined algorithm, then it compares results of executions of the other algorithm and of the predetermined algorithm, then it forces the result appearing at least two times as a correct result, and triggers replacement of the current value with the predetermined value.

In this third example, the detection means DM compares the current value in the predetermined register with the predetermined value which is intended for triggering a triple Data Encryption Standard algorithm (or TDES), for instance. Then, if this current value differs from the predetermined value and is intended for triggering a simple Data Encryption Standard algorithm (or DES), the correction means CM may trigger execution of this simple Data Encryption Standard algorithm three times, then it may trigger execution of the triple Data Encryption Standard algorithm at least two times, then it may compare results of executions of the three successive simple Data Encryption Standard algorithms and of the triple Data Encryption Standard algorithms, then it may force the result that appears at least two times as a correct result, and finally it may trigger replacement of the current value with the predetermined value.

A fourth example concerns the fault attacks that induce modification of the result of one sensitive process execution amongst at least three kind of successive executions that should normally provide three times the same correct result without any fault attack.

In this fourth example, the detection means DM compares the respective results of the successive executions and considers that the result which appears at least two times is the correct result. Then the correction means CM replaces each execution result which differs from this correct result with this correct result. So the execution redundancy is advantageously used to determine which execution is correct (as it has been done at least twice in the same way). This principle can be also applied to ciphering (or cryptographic) algorithms, such as TDES and AES (Advanced Encryption Standard), and to low-level functions used in public algorithms, such as modular operations.

The invention can also be considered in terms of a protection method for an electronic device ED. Such a method may be implemented by means of a protection device PD such as the one above described with reference to the unique figure. Therefore, only its main characteristics will be mentioned hereafter.

The protection method according to the invention comprises the steps of:
(i) detecting a fault effect into the electronic device ED, resulting from at least one fault attack of an attacker during execution of a sensitive process SP, and
(ii) correcting this detected fault effect before it may be detected by the attacker, so that set up of the fault be considered as missed by this attacker.

The invention offers several advantages, amongst which:
- resistance to fault attacks without any fatal reactions (such as card suicide),
- protection for the so-called special function register (or SFR),
- protection against combined attacks,
- it may prevent certain multi-fault attack scenarios,
- use of redundancy not only for detection but also for correction.

The invention is not limited to the embodiments of protection method, protection device and electronic device described above, only as examples, but it encompasses all alternative embodiments which may be considered by one skilled in the art within the scope of the claims hereafter.

## Claims

1. Method for protecting an electronic device (ED), comprising hardware and software capable of executing a sensitive process (SP), against fault attack(s), **characterized in that** it comprises the steps of:
(i) detecting a fault effect into said electronic device (ED), resulting from at least one fault attack of an attacker during execution of said sensitive process (SP), and
(ii) correcting said detected fault effect before said fault effect be detected by said attacker and before any output is sent outside said electronic device (ED), so that set up of the fault be considered as missed by said attacker.

2. Method according to claim 1, wherein in step (i) one compares a first value stored in a first memory means, that may be subject to a fault attack, with an initial value stored in at least one second memory means, and in step (ii) one replaces said first value with said initial value into said first memory means if said first value differs from said initial value.

3. Method according to one of claims 1 and 2, wherein in step (i), in case where execution beginning of said sensitive process (SP) requires a confidential information and reception of an erroneous information should induce a predetermined modification, one compares each information received by said electronic device (ED) with said confidential information and determines if said information reception has induced said predetermined modification, and in step (ii), if said received information differs from said confidential information and has not induced said predetermined modification, one proceeds to said predetermined modification.

4. Method according to claim 3, wherein in step (i), in case where execution beginning of said sensitive process (SP) requires a confidential information which is a confidential code and reception of an erroneous code should induce a predetermined modification which is an increment of a current value of a counter, one compares each code received by said electronic device (ED) with said confidential code and the counter value after said code reception with the counter value before said code reception, and in step (ii), if said received code differs from said confidential code and if said counter value after said code reception is identical to said counter value before said code reception, one increments the counter value.

5. Method according to one of claims 1 and 2, wherein in step (i), in case where execution of said sensitive process (SP) comprises execution of a predetermined algorithm triggered by a predetermined value in a predetermined register, one compares the current value in said predetermined register with said predetermined value, and in step (ii), if said current value differs from said predetermined value and is intended for triggering another algorithm, one executes an odd number of times, at least equal to three, said other algorithm, then one executes at least two times said predetermined algorithm, then one compares results of executions of said other algorithm and of said predetermined algorithm, and one keeps the result appearing at least two times and replaces said current value with said predetermined value.

6. Method according to claim 5, wherein in step (i), in case where execution of said sensitive process (SP) comprises execution of a triple Data Encryption Standard algorithm triggered by a predetermined value in a predetermined register, one compares the current value in said predetermined register with said predetermined value, and in step (ii), if said current value differs from said predetermined value and is intended for triggering a simple Data Encryption Standard algorithm, one executes three times said simple Data Encryption Standard algorithm, then one executes at least two times said triple Data Encryption Standard algorithm, then one compares results of executions of the three simple Data Encryption Standard algorithm and of the triple Data Encryption Standard algorithms, and one keeps the result appearing at least two times and replaces said current value with said predetermined value.

7. Method according to one of claims 1 and 2, wherein in step (i), in case where said sensitive process (SP) must be executed at least three times, one compares the results of said executions, and one keeps the result appearing at least two times, called "correct result", and in step (ii) one replaces each result differing from said correct result with this correct result.

8. Protection device (PD) for an electronic device (ED) comprising hardware and software capable of executing a sensitive process (SP), **characterized in that** it comprises i) a detection means (DM) arranged for detecting a fault effect into said electronic device (ED) resulting from at least one fault attack of an attacker during execution of said sensitive process (SP), and ii) a correction means (CM) arranged for correcting said detected fault effect before said fault effect be detected by said attacker and before any output is sent outside said electronic device (ED), so that set up of the fault be considered as missed by said attacker.

9. Protection device according to claim 8, wherein said detection means (DM) is arranged for comparing a first value stored in a first memory means, that may be subject to a fault attack, with an initial value stored in at least one second memory means, and said correction means (CM) is arranged for replacing said first value with said initial value into said first memory means if said first value differs from said initial value.

10. Protection device according to claim 8, wherein in case where execution beginning of said sensitive process (SP) requires a confidential information and reception of an erroneous information should induce a predetermined modification, said detection means (DM) is arranged for comparing each information received by said electronic device (ED) with said confidential information and for determining if said information reception has induced said predetermined modification, and said correction means (CM) is arranged, if said received information differs from said confidential information and has not induced said predetermined modification, for triggering said predetermined modification.

11. Protection device according to claim 10, wherein in case where execution beginning of said sensitive process (SP) requires a confidential information which is a confidential code and reception of an erroneous information should induce a predetermined modification which is an increment of a current value of a counter, said detection means (DM) is arranged for comparing each code received by said electronic device (ED) with said confidential code and the counter value after said code reception with the counter value before said code reception, and said correction means (CM) is arranged, if said received code differs from said confidential code and if said counter value after said code reception is identical to said counter value before said code reception, for incrementing the counter value.

12. Protection device according to claim 8, wherein in case where execution of said sensitive process (SP) comprises execution of a predetermined algorithm triggered by a predetermined value in a predetermined register, said detection means (DM) is arranged for comparing the current value in said predetermined register with said predetermined value, and said correction means (CM) is arranged, if said current value differs from said predetermined value and is intended for triggering another algorithm, for triggering execution an odd number of times, at least equal to three, of said other algorithm, then for triggering execution at least two times of said predetermined algorithm, then for comparing results of executions of said other algorithm and of said predetermined algorithm, and for forcing the result appearing at least two times as a correct result, and for triggering replacement of said current value with said predetermined value.

13. Protection device according to claim 12, **characterized in that** in case where execution of said sensitive process (SP) comprises execution of a triple Data Encryption Standard algorithm triggered by a predetermined value in a predetermined register, said detection means (DM) is arranged for comparing the current value in said predetermined register with said predetermined value, and said correction means (CM) is arranged, if said current value differs from said predetermined value and is intended for triggering a simple Data Encryption Standard algorithm, for triggering execution of said simple Data Encryption Standard algorithm three times, then for triggering execution of said triple Data Encryption Standard algorithm at least two times, then for comparing results of executions of the three simple Data Encryption Standard algorithms and of the triple Data Encryption Standard algorithms, for forcing the result appearing at least two times as a correct result, and for triggering replacement of said current value with said predetermined value.

14. Protection device according to claim 8, **characterized in that**, in case where said sensitive process (SP) must be executed at least three times, said detection means (DM) is arranged for comparing the results of said executions and for considering the result appearing at least two times as a correct result, and said correction means (CM) is arranged for replacing each result differing from said correct result with this correct result.

15. Electronic device (ED) comprising hardware and software capable of executing a sensitive process (SP), **characterized in that** it further comprises a protection device (PD) according to one of claims 8 to 14.

16. Electronic device according to claim 15, **characterized in that** it is chosen from a group comprising at least a smart card, a memory card reader, a telecommunication device, and a portable memory means.
